Europäisches Patentamt

European Patent Office

Office européen des brevets

(11) Veröffentlichungsnummer: **0 213 278 B1**

# EUROPÄISCHE PATENTSCHRIFT

(45) Veröffentlichungstag der Patentschrift: 06.03.91

(51) Int. Cl.⁵: **G01N 1/22**, G01N 31/22

(21) Anmeldenummer: **86107053.0**

(22) Anmeldetag: **23.05.86**

(54) **Diffusions-Probensammler für gasförmige Medien.**

(30) Priorität: **05.09.85 DE 3531650**

(43) Veröffentlichungstag der Anmeldung:
**11.03.87 Patentblatt 87/11**

(45) Bekanntmachung des Hinweises auf die
Patenterteilung:
**06.03.91 Patentblatt 91/10**

(84) Benannte Vertragsstaaten:
**DE FR GB NL**

(56) Entgegenhaltungen:
**EP-A- 0 042 683**
**DE-A- 3 012 380**
**GB-A- 2 084 725**
**US-A- 3 022 141**

(73) Patentinhaber: **Drägerwerk Aktiengesellschaft**
**Moislinger Allee 53-55**
**W-2400 Lübeck 1(DE)**

(72) Erfinder: **Pannwitz, Karl-Heinz, Dipl.-Ing.**
**Krempelsdorfer Allee 51h**
**W-2400 Lübeck(DE)**

## Beschreibung

Die Erfindung betrifft einen Diffusions-Probensammler für gasförmige Medien, bestehend aus einem zweiseitig offenen, duchsichtigen Behälter, der eine Sammelschicht und eine Indikator=schicht enthält und an seinen beiden offenen Seiten durchlässige Halteelemente besitzt.

Ein derartiger Diffusions-Probensammler ist aus der DE-A-30 12 380 bekanntgeworden.

Der bekannte Probensammler besteht aus einem durchsichtigen Rohr, welches mit einer Sammelschicht, beispielsweise Aktivkohle, gefüllt ist und an seinen beiden Enden mit einem porösen Diffusionsraster abgeschlossen ist. Derartige Probensammler werden von Personen getragen, die in Umgebungsluft mit schädlichen Bestandteilen arbeiten. Die während des Aufenthalts in der schädlichen Umgebungsluft gesammelten Schadstoffe werden durch eine nachfolgende Laboranalyse der Sammelschicht ermittelt. Dazu wird der von der Sammelschicht adsorbierte Schadstoff auf chemischem Wege gelöst und nachgewiesen. Die Menge der nachgewiesenen Schadstoffe gibt, bezogen auf die Tragezeit, die Durchschnittsbelastung der Person an.

Ein wesentlicher Nachteil dieses bekannten Probensammlers besteht darin, daß vor einer Laboranalyse nicht erkennbar ist, ob überhaupt eine Belastung mit Schadstoffen erfolgt ist. Dieser Befund ergibt sich erst aus der aufwendigen Laboranalyse der Sammelschicht, die sich dann im nachhinein als unnötig erwiesen hat, wenn keine Belastung erfolgte. Außerdem läßt der bekannte Probensammler lediglich einen Schluß auf die Menge des in einer Zeiteinheit kumulierten Schadstoffes zu. Steigt während der Expositionsdauer die Schadstoffmenge rapide an, wird dies durch den Probensammler nicht angezeigt, so daß für die betreffende Person keine Warnung vor einer möglichen Gefahr gegeben ist, der sie durch eine eventuelle Flucht entgehen könnte.

Die vorliegende Erfindung geht von der Aufgabe aus, einen Diffusions-Probensammler der bekannten Art so zu verbessern, daß schon während des Probesammelns erkennbar wird, ob Schadstoffe in der zu untersuchenden Umgebungsluft vorhanden sind, damit einerseits eine unnötige Laboranalyse der Sammelschicht bei abwesenden Schadstoffen vermieden wird, und andererseits bei Gasausbrüchen die betreffende Person geeignete Maßnahmen zu ihrem Schutz ergreifen kann.

Diese Aufgabe wird gemäß dem Kennzeichnenden Teil von Anspruch

Im wesentlichen sind die Vorteile der Erfindung darin zu sehen, daß anhand der Indikatorschicht beurteilt werden kann, ob eine Exposition stattgefunden hat und eine nachträgliche Laboranalyse der Sammelschicht notwendig ist. Der Träger des Probensammlers selbst kann durch Beobachtung des Indikators beurteilen, ob er sich in einer mit Schadstoff belasteten Atmosphäre bewegt oder nicht. Bei ungewöhnlich schnellem Anstieg der Indikatoranzeige wird die betreffende Person frühzeitig auf eine mögliche Gefahr hingewiesen, so daß sie entsprechende Gegenmaßnahmen einleiten kann. Ein weiterer Vorteil liegt darin, daß nunmehr ein Probensammler, der offensichtlich keiner Schadstoffbelastung ausgesetzt war, ohne Beeinträchtigung weiterhin benutzt werden kann. Dadurch wird die Benutzungsdauer des Probensammlers erhöht.

Vorzugsweise besteht die Indikatorschicht aus einem imprägnierten körnigen Substrat, welches sich unter der Anwesenheit der zu sammelnden Gaskomponente verfärbt. Substrat und Imprägnierung sind, wie es auf dem Gebiet der Prüfröhrchen bekannt ist, auf den Nachweis der Schadstoffkomponenten abgestimmt. So besteht der körnige Träger beispielsweise aus Glasgrieß, imprägniert mit Chrom-VI-oxid und einem Gemisch aus verdünnter Phosphorsäure und Schwefelsäure, wenn der Nachweis von Alkoholdämpfen erbracht werden soll. Zur Anzeige von aromatischen Kohlenwasserstoffen wie Benzol oder Toluol wird als körniger Träger Silicagel verwandt, welcher mir Paraformaldehyd und konzentrierter Schwefelsäure imprägniert ist.

Statt einer körnigen Indikatorschicht kann in weiterer Ausgestaltung der Erfindung ein imprägnierter Papierstreifen eingesetzt werden. Dieser ermöglicht eine höhere Anzeigegenauigkeit für die Verfärbungszone.

Sollen solche gasförmigen Stoffe nachgewiesen werden, welche in der Indikatorschicht keine unmittelbare Verfärbung auslösen, wird zweckmäßigerweise zwischen der undurchlässig ausgebildeten Trennwand und der Indikatorschicht eine poröse Reagenzschicht zur Umwandlung der nachzuweisenden Gaskomponente in die Indikatorschicht verfärbende Substanzen zwischengeschaltet. Eine solche Reagenzschicht ist insbesondere dann von Nutzen, wenn chlorierte Kohlenwasserstoffe, wie z.B. Vinylchlorid, nachgewiesen werden sollen. Dazu besteht die Reagenzschicht vorzugsweise aus körnigem Aluminiumsilicat, welches mit Chrom-VI-oxid und Schwefelsäure imprägniert ist. In der Reagenzschicht wird als Reaktionsprodukt Chlor freigesetzt, welches anschließend in der Indikatorschicht, die beispielsweise aus mit o-Tolidin imprägniertem Silicagel besteht, durch eine Farbreaktion nachgewiesen wird.

Wasserdampfempfindliche Imprägnierungen der Indikatorschicht werden vorteilhafterweise dadurch geschützt, daß der Indikatorschicht eine Trockenschicht vorgeschaltet ist.

Ein Ausführungsbeispiel der Erfindung wird anhand der schematischen Zeichnung dargestellt und im folgenden näher erläutert.

Es zeigen

Fig. 1    einen Schnitt durch den Diffusions-Probensammler

Fig. 2    einen Schnitt durch den Diffusions-Probensammler mit Reagenzschicht und Papierstreifen als Indikatorschicht.

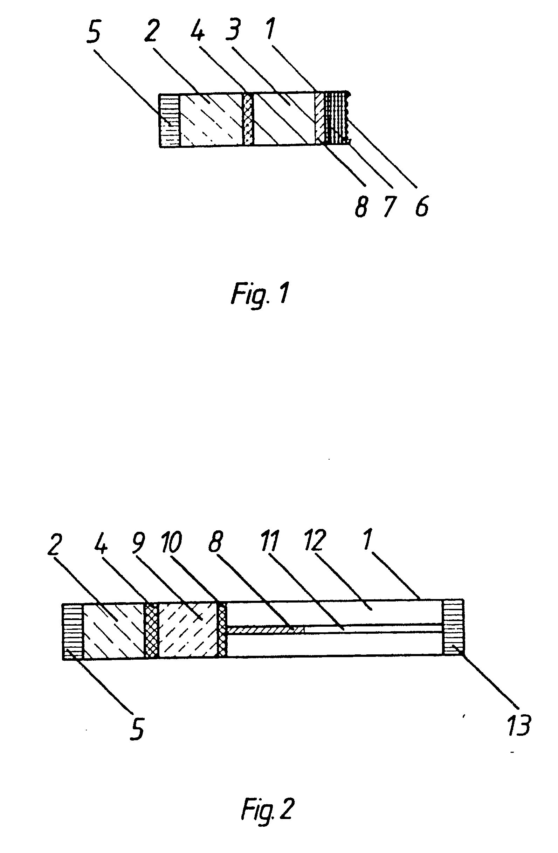

In Figur 1 ist der Behälter 1 des Probensammlers je zur Hälfte mit der Sammelschicht 2, z.B. Aktivkohle, und mit einem imprägnierten körnigen Substrat als Indikatorschicht 3 gefüllt. Aktivkohle 2 und Indikatorschicht 3 sind durch eine Trennwand 4 voneinander abgeteilt. Die beiden Enden des beispielsweise als Glasröhrchen ausgebildeten Behälters 1 sind mit durchlässigen Halteelementen 5, 6 verschlossen. Während das eine Halteelement 5 für die Aktivkohle 2 aus Acetatcellulose bestehen kann, ist das zweite Halteelement 6 für eine der Indikatorschicht 3 vorgelagerte Trockenschicht 7 beispielsweise aus Drahtgewebe ausgebildet.

In dem dargestellten Zustand ist der Probensammler in geöffnetem Zustand dem zu untersuchenden Gas ausgesetzt, wobei der zu sammelnde Schadstoff in der Aktivkohle 2 gesammelt wird und gleichzeitig in der Indikatorschicht 3 eine Verfärbung der Imprägnierung stattfindet, welche als Verfärbungszone8, beginnend von der Trockenschicht 7, mit andauernder Expositionszeit in Richtung auf die Trennwand 4 fortschreitet.

Nach Beendigung der Exposition kann der Probensammler mit zwei nicht dargestellten Verschlußkappen an seinen jeweiligen Enden verschlossen werden, um Rückdiffusion oder nachträgliches Eindiffundieren von weiteren Schadstoffen, welche das Meßergebnis verfälschen könnten, zu verhindern.

In Figur 2 ist das Glasröhrchen 1 an seinem einen Ende mit Aktivkohle 2 gefüllt, welche von der danebenliegenden Reagenzschicht 9 durch die undurchlässige Trennwand 4 abgeteilt ist. An die Reagenzschicht 9 schließt sich eine durchlässige Halterung 10 an, die einen Teilraum 12 des Glasröhrchens 1 abschließt, welcher die auf einem Papierstreifen 11 ausgebildete Indikatorschicht enthält. Der Papierstreifen 11 mit der Indikatorschicht weist an seiner der Halterung zugewandten Seite einer Verfärbungszone 8 auf. Die beiden Enden des Glasröhrchens 1 sind mit den durchlässigen Halteelementen 5,13 abgeschlossen.

Der in Figur 2 dargestellte Probensammler ist einer Atmosphäre ausgesetzt, welche einen Schadstoff enthält, der den als Indikatorschicht ausgebildeten Papierstreifen 11 nicht verfärbt, sondern erst über die Reagenzschicht 9 in solche Substanzen zerlegt werden muß, die auf der Indikatorschicht eine Verfärbungszone 8 entstehen lassen. Diese Verfärbungszone 8 schreitet mit anhaltender Expositionsdauer von der Halterung 10 ausgehend in Richtung auf das Halteelement 13 fort. Nach Gebrauch kann auch dieser Probensammler durch zwei nicht dargestellte Verschlußkappen an seinen Enden verschlossen werden.

**Ansprüche**

1. Diffusions-Probensammler für gasförmige Medien, bestehend aus einem zweiseitig offenen, durchsichtigen Behälter (1), der eine Sammelschicht (2) und eine Indikatorschicht (3, 11) enthält und an seinen beiden offenen Seiten durchlässige Halteelemente (5, 6, 13) besitzt, dadurch gekennzeichnet, daß die Indikatorschicht (3, 11) einerseits von der Sammelschicht (2) durch eine undurchlässige Trennwand (4) abgeteilt und andererseits dem zu untersuchenden Gas ausgesetzt ist, wobei das durchlässige Halteelement (6, 13) lediglich als Abschlußelement für die Indikatorschicht dient und einen unbeeinflußten Zutritt des nachzuweisenden Schadstoffes zur Indikatorschicht (3, 11) erlaubt.

2. Diffusions-Probensammler nach Anspruch 1, **dadurch gekennzeichnet,** daß, die Indikatorschicht (3) aus einem durch die Einwirkung der zu sammelnden Gaskomponente verfärbbaren imprägnierten körnigen Substrat besteht.

3. Diffusions-Probensammler nach Anspruch 1, **dadurch gekennzeichnet,** daß die Indikatorschicht (11) aus einem imprägnierten Papierstreifen besteht.

4. Diffusions-Probensammler nach einem der Ansprüche 1 bis 3, dadurch gekennzeichnet, daß zwischen der Trennwand (4) und der Indikatorschicht (11) eine poröse Reagenzschicht (19) zur Umwandlung der nachzuweisenden Gaskomponente in die Indikatorschicht (11) verfärbende Substanzen vorgesehen ist, wobei das durchlässige Halteelement (13) einen unbeeinflußten Zutritt (10, 12) des nach zuweisenden Schadstoffes zur porrösen Reagenzschicht (9) orlaubt.

5. Diffusions-Probensammler nach Anspruch 1, **dadurch gekennzeichnet,** daß der Indikatorschicht (3) eine Trockenschicht (7) vorgeschaltet ist.

**Claims**

1. Diffusion sample collector for gaseous media, consisting of a transparent container (1) which is open on two sides, contains a collecting layer (2) and an indicator layer (3, 11) and has on its two open sides permeable holding elements (5, 6, 13), characterised in that the indicator layer (3, 11) is separated, on the one side, from the collecting layer (2) by means of an impermeable partition wall (4) and is exposed, on the other side, to the gas to be investigated, with the permeable holding element (6, 13) merely serving as a closing element for the indicator layer and permitting unaffected access of the harmful substance to be detected to the indicator layer (3, 11).

2. Diffusion sample collector according to claim 1, characterised in that the indicator layer (3) consists of an impregnated, granular substrate which is capable of being discoloured by the action of the gas component to be collected.

3. Diffusion sample collector according to claim 1, characterised in that the indicator layer (11) consists of an impregnated paper strip.

4. Diffusion sample collector according to one of the claims 1 to 3, characterised in that there is provided between the partition wall (4) and the indicator layer (11) a porous reagent layer (9) for the purpose of converting the gas component to be detected into substances which discolour the indicator layer (11), with the permeable holding element (13) permitting unaffected access (10, 12) of the harmful substance to be detected to the porous reagent layer (9).

5. Diffusion sample collector according to claim 1, characterised in that a dry layer (7) is arranged upstream of the indicator layer (3).


**Revendications**

1. Collecteur d'échantillons à diffusion pour fluides gazeux, constitué d'un récipient (1) transparent, ouvert sur deux côtés et qui contient une couche de collecte (2) et une couche d'indicateur (3, 11) et qui possède des éléments de fixation (5, 6, 13) perméables sur ses deux côtés ouverts, caractérisé en ce que la couche d'indicateur (3, 11) est séparée d'une part de la couche de collecte (2) par une cloison (4) imperméable et d'autre part est exposée au gaz à analyser, l'élément de fixation (6, 13) perméable servant uniquement d'élément de fermeture pour la couche d'indicateur et permettant à la substance nocive à déceler de parvenir, non influencée, à la couche d'indicateur (3, 11).

2. Collecteur d'échantillons à diffusion selon la revendication 1, caractérisé en ce que la couche d'indicateur (3) est constituée d'un substrat granuleux imprégné et pouvant être coloré sous l'effet du composant gazeux à collecter.

3. Collecteur d'échantillons à diffusion selon la revendication 1, caractérisé en ce que la couche d'indicateur (11) est réalisée dans une bande de papier imprégné.

4. Collecteur d'échantillons à diffusion selon l'une des revendications 1 à 3, caractérisé en ce qu'est prévue, entre la cloison (4) et la couche d'indicateur (11), une couche de réactif (9) poreux, pour transformer le composant gazeux à déceler dans les substances colorant la couche d'indicateur (11), l'élément de fixation (13) perméable permettant à la substance nocive à déceler un libre accès (10, 12) à la couche de réactif (9) poreuse.

5. Collecteur d'échantillons à diffusion selon la revendication 1, caractérisé en ce qu'une couche sèche (7) est placée devant la couche d'indicateur (3).

5   2   4   3   1

8   7   6

*Fig. 1*

2   4   9   10   8   11   12   1

5

13

*Fig. 2*